# EUROPÄISCHE PATENTANMELDUNG

(11) **EP 3 653 410 A1**
(43) Veröffentlichungstag der Anmeldung: **20.05.2020**
(21) Anmeldenummer: 19209045.4
(22) Anmeldetag: 14.11.2019
(51) Int. Cl.: B60G 15/06

(54) **VORRICHTUNG ZUM VERBINDEN EINES FEDERBEINES MIT EINER KAROSSERIE**

(30) Priorität: 14.11.2018 LU 100997
(71) Anmelder: Ovalo GmbH, 65555 Limburg (DE)
(72) Erfinder:
(74) Vertreter: Hoffmann, Jürgen

(57) **Zusammenfassung**

Die Erfindung betrifft eine Vorrichtung 1 zum Verbinden eines Federbeines 2, das eine Feder 3 und einen hydraulischen Stoßdämpfer 4 aufweist, mit einer Karosserie 5, wobei die Vorrichtung 1 einen ersten Ankoppelabschnitt 6 zum Ankoppeln an die Karosserie 5 und einen zweiten Ankoppelabschnitt 7 zum Ankoppeln an das Ende einer Kolbenstange eines hydraulischen Stoßdämpfers 4 des Federbeins 2 und einen dritten Ankoppelabschnitt 8 zum Ankoppeln an die Feder 3 des Federbeins 2 aufweist. Die Vorrichtung 1 zeichnet sich dadurch aus, dass die Vorrichtung 1 eine Stellvorrichtung 9 beinhaltet, die einen Aktuator mit einem Elektromotor 16 und mit einem dem Elektromotor 16 triebtechnisch nachgeschalteten Getriebe 17 aufweist, mittels der der Abstand des ersten Ankoppelabschnitts 6 relativ zu dem zweiten 7 und dritten Ankoppelabschnitt 8 einstellbar ist und der Abstand des zweiten Ankoppelabschnitts 7 zu dem dritten Ankoppelabschnitt 8 bei einem Einstellvorgang konstant bleibt, wobei die Kolbenstange an dem Ende ein Außengewinde für eine Befestigungsmutter aufweist und/oder wobei die Kolbenstange nicht Teil der Stellvorrichtung 9 ist.

## Beschreibung

Die Erfindung betrifft eine Vorrichtung zum Verbinden eines Federbeines, das eine Feder und einen hydraulischen Stoßdämpfer aufweist, mit einer Karosserie, wobei die Vorrichtung einen ersten Ankoppelabschnitt zum Ankoppeln an die Karosserie und einen zweiten Ankoppelabschnitt zum Ankoppeln an das Ende einer Kolbenstange eines hydraulischen Stoßdämpfers des Federbeins und einen dritten Ankoppelabschnitt zum Ankoppeln an die Feder des Federbeins aufweist.

Die Erfindung betrifft außerdem ein Fahrwerk mit einer solchen Vorrichtung sowie ein Fahrzeug mit einer solchen Vorrichtung.

Ein Domlager ist ein Teil des Fahrwerks von Kraftfahrzeugen und dient dazu, ein Federbein karosserieseitig, zumeist in einem Federbeindom, zu lagern. Bei modernen Serienfahrzeugen besteht das Domlager zumeist aus einem Gummi-Metall-Element. Um eine Lenkbewegung zu ermöglichen, weisen die Domlager zur Lagerung der Federbeine gelenkter Räder, zumeist an der Vorderachse, jeweils ein Wälzlager auf, so dass sich das Federbein beim Lenken gegenüber der Karosserie drehen kann. Bei den Domlagern zur Lagerung der Federbeine nicht gelenkter Räder, zumeist an der Hinterachse, fehlt in aller Regel das Kugellager, da sich diese Federbeine nicht zu drehen brauchen.

Mittels einer Niveauregulierung kann ein Fahrzeug in seiner Höhe konstant gehalten, angehoben oder abgesenkt werden. Niveauregulierungen werden beispielsweise eingesetzt, um das Fahrzeugniveau bei verschiedenen Beladungszuständen konstant zu halten. Eine Niveauregulierung kann auch dazu dienen, das Fahrzeugniveau für einen bestimmten Einsatzzweck anzuheben oder abzusenken oder dazu, das Fahrzeugniveau aus optischen Gründen zu verändern.

Aus DE 10 2013 114 551 A1 ist ein Fahrzeug-Gasfederungssystem mit zwischen einem Fahrzeugaufbau und einer Fahrzeugachse anordenbaren und mit einem Gas befüllbaren Balgenmitteln bekannt. Eine ähnliche Vorrichtung ist aus DE 10 2013 105 759 A1 bekannt.

DE 43 32 100 A1 offenbart eine Niveauregelvorrichtung zur Einstellung einer gewünschten Nullposition einer Fahrzeugaufbauhöhe, mit einem elektronischen Steuergerät und mit Aktuatoren zur selbsttätigen Einstellung einer Fahrzeugaufbauhöhe. Außerdem weist die Vorrichtung einen Höhensensor zur Erfassung der eingestellten Ist-Fahrzeugaufbauhöhe auf, wobei eine gewünschte Nullposition durch eine Soll-Fahrzeugaufbauhöhe vorgegeben ist. Der Nullposition ist ein im Steuergerät vorprogrammierter Soll-Wert zur selbsttätigen Einstellung der Fahrzeugaufbauhöhe zugeordnet. Die aufgrund des Soll-Wertes selbsttätig eingestellte Ist-Fahrzeugaufbauhöhe wird durch den Höhensensor erfasst und mit der gewünschten Nullposition verglichen. Der vorprogrammierte Soll-Wert ist entsprechend der Differenz zwischen der selbsttätig eingestellten Ist-Fahrzeugaufbauhöhe und der gewünschten Nullposition im Steuergerät korrigierbar.

DE 60 2004 001 715 T2 offenbart eine Luftfeder-Dämpferanordnung, die ein erstes Gehäuse und ein zweites Gehäuse aufweist und die relativ zueinander teleskopartig angeordnet sind. Ein Betätigungselement, wie beispielsweise ein Kabel, ist mit einem Höhenausgleichsventil verbunden, das in einem der Gehäuse angeordnet und an dem anderen Gehäuse befestigt ist. Das Betätigungselement bewegt ein Element, wie beispielsweise einen rotierenden Nocken, eine rotierende Ventilplatte oder ein rotierendes Ventil. Eine Drehung des Elements öffnet selektiv Einlass- und Auslass-Strömungswege, um den Luftdruck in der Dämpferanordnung zu steuern und die Luftfederungshöhe auf einer vorbestimmten Höhe zu halten.

DE 41 15 593 A1 offenbart eine Niveauregeleinrichtung für Kraftfahrzeuge mit zwei jeweils einer Fahrzeugachse zugeordneten Aktuatoren, die als Arbeitszylinder ausgebildet sind. Die Niveauregeleinrichtung weist zwischen jeweils einer Radaufhängung und dem Fahrzeugaufbau ein Proportional-Druckregelventil mit drei Schaltstellungen zum wechselweisen Verbinden der Druckräume der zugeordneten Aktuatoren mit einer Druckmittelquelle und einer Druckmittelsenke sowie zum Absperren des Druckraums auf. Zur Verhinderung instabiler Fahrzustände bei Ausfall der Niveauregeleinrichtung ist durch eine konstruktive Maßnahme sichergestellt, daß in einer Druckraumsperrphase der beiden Aktuatoren deren beiden Druckräume über eine Drossel miteinander verbunden sind. Dadurch können sich stark unterschiedliche Drücke in den Aktuatoren im Moment ihres Sperrens ausgleichen, so daß ein instabiles Verhalten des Fahrzeugs vermieden wird. Vorzugsweise wird die Drosselstelle in druckdichten Sitzventilen vorgesehen, die zwischen den Proportional-Druckregelventilen und den Aktuatoren geschaltet sind.

DE 10 2007 050 252 B4 offenbart ein Niveauregulierungssystem eines Kraftfahrzeugs, wobei jedem Rad eines Kraftfahrzeugs ein fluidisch betätigbares Niveauregulierungselement zugeordnet ist. Außerdem ist jedes Niveauregulierungselement, unter Zwischenschaltung eines für jedes Niveauregulierungselement individuellen Niveauventils und eines für alle Niveauregulierungselemente gemeinsamen Kompressors, mit einem für alle Niveauregulierungselemente gemeinsamen Druckspeicher derart verbunden, dass zum Anheben eines Fahrzeugaufbaus mindestens ein Niveauregulierungselement bei laufenden Kompressor und bei geöffnetem Niveauventil vom Druckspeicher aus befüllbar ist. Außerdem ist zum Absenken des Fahrzeugaufbaus mindestens ein Niveauregulierungselement bei geöffnetem Niveauventil und laufendem Kompressor in den Druckspeicher zumindest teilweise entleerbar, wobei jedem Rad ein Sensor zugeordnet ist, der einen Niveau-Istwert erfasst. Hierbei wird jeder Niveau-Istwert derart gefiltert, dass ein Niveau-Istwert, der eine Radbewegung des jeweiligen Rads abbildet und ein Niveau-Istwert, der eine Fahrzeugaufbaubewegung des Fahrzeugaufbaus abbildet, bereitgestellt wird, wobei die Niveauventile abhängig von dem von der Radbewegung des jeweiligen Rads abhängigen Niveau-Istwerts geöffnet und geschlossen werden. Außerdem wird hierbei der Kompressor, abhängig von dem von der Fahrzeugaufbaubewegung des Fahrzeugaufbaus abhängigen Niveau-Istwerts, ein- und ausgeschaltet, wobei das Öffnen und Schließen der Niveauventile unabhängig von dem die Fahrzeugaufbaubewegung des Fahrzeugaufbaus abbildenden Niveau-Istwert erfolgt. Das Ein- und Ausschalten des Kompressors erfolgt unabhängig von dem die Radbewegung des jeweiligen Rads abbildenden Niveau-Istwerts. Wenn beim Anheben des Fahrzeugaufbaus der die Radbewegung eines Rads abbildende Niveau-Istwert einen Niveau-Sollwert überschreitet oder erreicht, oder wenn beim Absenken des Fahrzeugaufbaus der die Radbewegung eines Rads abbildende Niveau-Istwert einen Niveau-Sollwert unterschreitet oder erreicht, wird das jeweilige Niveauventil geschlossen.

DE 196 22 677 A1 offenbart ein Fahrzeug mit niveauregulierter Luftfederung.

Aus DE 20 2008 004 545 U1 ist ein Nutzfahrzeug mit einer Gasfederung, insbesondere Luftfederung, die einen oder mehrere zwischen einer Achse und einem Fahrzeugrahmen angeordnete Federbälge umfasst, bekannt. Die Federbälge sind mit wenigstens einem Niveauregulierungsventil derart gekoppelt, dass die Fahrhöhe des Nutzfahrzeugs veränderbar ist. Das Niveauregulierungsventil weist einen Druckauslass, der zur Umgebung hin offen ist, und einen Steuerdruckeingang auf. Der Steuerdruckeingang ist direkt mit wenigstens einem Federbalg derart verbunden, so dass die Fahrhöhe des Nutzfahrzeugs in Abhängigkeit vom Druck innerhalb wenigstens eines Federbalgs veränderbar ist.

EP 1 844 961 A1 offenbart ein Verfahren zur Niveauregulierung eines Fahrzeugaufbaus mittels Be- oder Entlüften von Luftbälgen, die zusätzlich zu einer Stahlfederung an einer Fahrzeugachse angebracht sind.

Aus DE 101 60 972 C1 ist ein Verfahren zur Regelung einer Luftmenge in einem geschlossenen, befüll- und entleerbaren pneumatischen Niveauregulierungssystem eines Fahrzeugs bekannt.

DE 10 2013 105 759 A1 offenbart ein Fahrzeug-Gasfederungssystem, insbesondere Kraftfahrzeug-Luftfederungssystem, mit zwischen einem Fahrzeugaufbau und einer Fahrzeugachse vorsehbaren, und mit einem Gas befüllbaren Balgenmitteln. Den Balgenmitteln sind für die Befüllung erste Ventilmitteln vorgeschaltet und die Balgenmittel sind zur Betätigung dieser ersten Ventilmittel eingerichtet. Außerdem weist das Fahrzeug-Gasfederungssystem Sensormittel zum Detektieren einer Fahrzeughöhe, insbesondere eine Fahrzeug-Aufbauhöhe, auf. Die Sensormittel sind zur Flusssteuerung eines Steuerfluids ausgebildet, wobei die ersten Ventilmittel als Reaktion auf ein von den Sensormitteln herangeführtes Volumen des Steuerfluids betätigbar sind. Außerdem sind zweite Ventilmittel den Sensormitteln derart zugeordnet, dass in einem ersten Betriebszustand das Volumen des Steuerfluids als Neben- oder Kurzschluss derart durch die zweiten Ventilmittel geführt wird, dass keine oder eine verringerte Betätigung der ersten Ventilmittel erfolgt.

Aus DE 101 01 694 C1 ist ein Fahrzeugfahrwerk bekannt, das einen Federträger zur Abstützung einer zwischen zwei Federtellern verspannten Wendelfeder und einen Schwingungsdämpfer aufweist. Ein Federteller ist mittels einer Antriebseinheit mit Elektromotor und Getriebe axial verstellbar, um den Abstand zwischen dem oberen Federende und dem Fahrzeugaufbau gering zu halten. Der Elektromotor ist als Ringmotor mit einem außen liegenden Stator und einem innen liegenden Rotor ausgebildet. Der Rotor trägt innenseitig eine Bewegungsmutter, die einen außenseitig als Gewindespindel ausgebildeten, mit dem Federteller verbundenen Federtellerträger axial verstellt. Das Fahrzeugfahrwerk hat den Nachteil, dass der Ringmotor radial viel Bauraum beansprucht. Dies insbesondere auch deshalb, weil er für einen Verstellvorgang ein hohes Drehmoment zum direkten Antreiben der Bewegungsmutter zu Verfügung stellen muss. Außerdem kann kein Standard-Federbein verwendet werden. Vielmehr muss ein Federbein speziell für diese Verwendung entwickelt und produziert werden.

Aus DE 102 37 644 A1 ist ein Federträger mit mindestens einem axial beweglichen Federteller bekannt, wobei ein Aktuator mit einem Rotor relativ zu seinem Stator eine Drehbewegung erzeugt, die von einer Bewegungskonvertierungseinrichtung in eine Axialbewegung des Federtellers umgesetzt wird. Es ist eine Momentenabstützungseinrichtung vorhanden, die eine Verdrehbewegung des Federtellers verhindert.

DE 10 2005 051 548 A1_offenbart eine Vorrichtung zum Einstellen der Radausrichtung und der Fahrzeughöhe. Die Stellvorrichtung beinhaltet drei hydraulische Längenvariationsmittel, mit denen der Abstand eines Stützenpaneels zu einer Karosserie einstellbar ist. An dem Stützenpaneel ist ein Federteller indirekt befestigt.

EP 1 219 476 A1 offenbart ein motorisch gesteuertes Federungssystem mit einer Höhenverstellung, das einen besonders ausgebildeten Stoßdämpfer aufweist. Der Stoßdämpfer hat eine Kolbenstange die am oberen Ende einen Kragen mit einem besonders großen Durchmesser aufweist. Die Höhenverstellung beinhaltet einen Motor, der an einem ersten Ankoppelabschnitt an der Karosserie befestigt ist. Der Motor treibt eine Welle an, die ein Außengewinde aufweist. In dem Kragen ist eine Bohrung mit einem Innengewinde vorhanden. Der Kragen bildet zusammen mit der Welle einen Spindeltrieb.

JP 2007 203633_offenbart eine Vorrichtung mit einer Stellvorrichtung, die einen Motor aufweist, und mit einer Feder. Die Feder und der Motor sind unmittelbar an der Karosserie gelagert.

DE 10 2015 212 640 A1_offenbart eine Federbeinstützlageranordnung mit einem Federbein. Das Federbein weist einen Dämpfer mit einer Kolbenstange sowie einen Fahrwerksdämpfer auf. Das Federbein stützt sich über ein Federbeinstützlager an einem verstellbaren Domlager ab. Das Domlager beinhaltet mehrere Ringe. Es gibt einen Grundring und einen Stellring, der von einem Aktuator angetriebenen wird. Durch Drehen an dem Stellring kann eingestellt werden, ob sich der Grundring über mehrere Stempel abstützt (weiche Einstellung) oder nicht (harte Einstellung). Insoweit kann die Härte des Federbeinstützlagers eingestellt werden.

Es ist die Aufgabe der vorliegenden Erfindung, eine Möglichkeit zur Realisierung einer Niveauregulierung anzugeben, die unkompliziert und flexibel und insbesondere ohne Einschränkung von Feder oder Dämpfereigenschaften, vorzugsweise unter Verwendung von massenhaft produzierten Standard-Federn und Standard-Stoßdämpfern, einsetzbar ist.

Die Aufgabe wird durch eine Vorrichtung der eingangs genannten Art gelöst, die dadurch gekennzeichnet ist, dass die Vorrichtung eine Stellvorrichtung beinhaltet, die einen Aktuator mit einem Elektromotor und mit einem dem Elektromotor triebtechnisch nachgeschalteten Getriebe aufweist, mittels der der Abstand des ersten Ankoppelabschnitts relativ zu dem zweiten und dritten Ankoppelabschnitt einstellbar ist und der Abstand des zweiten Ankoppelabschnitts zu dem dritten Ankoppelabschnitt bei einem Einstellvorgang konstant bleibt, wobei die Kolbenstange an dem Ende ein Außengewinde für eine Befestigungsmutter aufweist und/oder wobei die Kolbenstange nicht Teil der Stellvorrichtung ist.

Die erfindungsgemäße Vorrichtung hat den ganz besonderen Vorteil, dass eine elektromechanische Höhenverstellung des Fahrzeugaufbaus ermöglicht ist, die unkompliziert kostengünstig und in kompakter Bauweise realisiert werden kann. Insbesondere hat die Erfindung den ganz besonderen Vorteil, dass Standard-Stoßdämpfer verwendet werden können.

Die Erfindung hat den ganz besonderen Vorteil, dass ein Einstellen des Höhenstandes der Karosserie ermöglicht ist, ohne dass damit eine Einschränkung von Feder oder Dämpfereigenschaften einhergeht. Dies ist hierbei insbesondere darauf zurückzuführen, dass die Kolbenstange des Stoßdämpfers bei einem Einstellvorgang weder ausgezogen, noch eingeschoben wird.

Darüber hinaus hat die Erfindung, was weiter unten noch ausführlich dargelegt ist, den ganz besonderen Vorteil, dass ein Fahrzeug bei der Herstellung wahlweise entweder mit der erfindungsgemäßen Vorrichtung ausgerüstet werden kann, wenn eine Niveauregulierung bei diesem Fahrzeug vorgesehen ist, oder alternativ (und insbesondere, ohne dass Änderungen an der Karosserie erforderlich sind) stattdessen herkömmliche Domlager eingebaut werden können, wenn keine Niveauregulierung vorgesehen ist. Insbesondere ermöglicht es die Erfindung, dass unabhängig davon, ob eine Niveauregulierung eingebaut werden soll oder nicht, stets die gleichen Federbeine verwendet werden können, was die Serienproduktion von Fahrzeugen vereinfacht.

Bei einer vorteilhaften Ausführung weist die Stellvorrichtung einen Aktuator und eine von dem Aktuator angetriebene Axialverstelleinheit auf. Bei der Axialverstelleinheit kann es sich beispielsweise um einen Spindeltrieb handeln. Insbesondere kann die Axialverstelleinheit auch als Kugelgewindetrieb oder als Rollengewindetrieb, beispielsweise als Rollengewindetrieb mit Rollenrückführung oder als Planetenrollengewindetrieb, ausgebildet sein.

Vorzugsweise weist die Stellvorrichtung lediglich einen einzigen Aktuator auf. Eine solche Ausführung kann besonders bauraumsparend hergestellt werden.

Bei einer besonderen Ausführung beinhaltet der Aktuator einen Elektromotor, dem ein Getriebe triebtechnisch nachgeschaltet ist. Es ist alternativ jedoch auch möglich, dass der Elektromotor die Axialverstelleinheit ohne Zwischenschaltung eines Getriebes direkt oder indirekt antreibt.

Vorzugsweise ist ein Getriebeabtrieb des Getriebes mit einem Antrieb der Axialverstelleinheit drehmomentübertragend verbunden. Hierbei kann vorteilhaft vorgesehen sein, dass der Getriebeabtrieb des Getriebes torsionssteif und gleichzeitig biegeweich ausgebildet ist oder dass der Getriebeabtrieb des Getriebes mittels einer torsionssteifen und gleichzeitig biegeweichen Kupplung mit dem Antrieb der Axialverstelleinheit drehmomentübertragend verbunden ist. Diese Ausführungen haben den besonderen Vorteil, dass das Getriebe von radialen Bewegungen der Axialverstelleinheit, die im Fahrbetrieb beim Ein- und Ausfedern auftreten können, entkoppelt ist. Auf diese Weise ist das Getriebe vor derartigen Belastungen geschützt, so dass eine Beschädigung des Getriebes wirkungsvoll vermieden ist. Beispielsweise kann der Getriebeabtrieb des Getriebes als torsionssteife und gleichzeitig biegeweiche Glocke ausgebildet sein. Alternativ ist es auch möglich, dass wenigstens eine flexible Platte, insbesondere Blechplatte für eine biegeweiche Entkopplung als biegeweiche Kupplung zwischen das Getriebe und die Axialverstelleinheit geschaltet ist.

Die Axialverstelleinheit kann vorteilhaft mit dem Elektromotor in einem gemeinsamen Gehäuse angeordnet sein. Insbesondere kann vorteilhaft auch vorgesehen sein, dass der Elektromotor samt seinem nachgeschalteten Getriebe und der Axialverstelleinheit in einem gemeinsamen Gehäuse angeordnet sind.

Bei einer vorteilhaften Ausführung ist das Getriebe koaxial zu dem Elektromotor angeordnet. Dies ermöglicht eine besonders kompakte Bauweise und eine einfache Ankopplung des Elektromotors an das Getriebe. Alternativ oder zusätzlich kann vorteilhaft auch vorgesehen sein, dass das Getriebe koaxial zu der Achsverstelleinheit angeordnet ist. Auch dies ermöglicht es, die Stellvorrichtung kompakt auszubilden und darüber hinaus eine einfache und zuverlässige Ankopplung des Getriebes an die Axialverstelleinheit.

Insbesondere um einen möglichst großen Bauraum für eine Feder und/oder einen Stoßdämpfer zur Verfügung zu stellen, können der zweite und der dritte Ankoppelabschnitt vorteilhaft derart angeordnet sein, dass ein Teil der Feder und/oder ein Teil des Stoßdämpfers, insbesondere ein Teil der Kolbenstange des Stoßdämpfers, im Einbauzustand von der Axialverstelleinheit und/oder von dem Getriebe und/oder von dem Elektromotor koaxial umgeben ist. Beispielsweise kann der Wellengenerator eines als Spannungswellengetriebe ausgeführten Getriebes als Hohlwelle ausgebildet sein, so dass sich die Feder und/oder die Kolbenstange in den Wellengenerator oder durch den Wellengenerator hindurch erstrecken können. Es ist beispielsweise insbesondere auch möglich, dass der Elektromotor als Hohlwellenmotor ausgebildet ist, so dass sich die Feder und/oder ein Teil des Stoßdämpfers in die als Hohlwelle ausgebildete Abtriebswelle des Elektromotors erstrecken können oder durch die als Hohlwelle ausgebildete Abtriebswelle des Elektromotors erstrecken können. Auch in Bezug auf die Axialverstelleinheit kann eine solche Bauweise vorteilhaft realisiert sein. Beispielsweise kann die Axialverstelleinheit eine als Hohlwelle mit einem Außengewinde versehene Spindel aufweisen, in die oder durch die sich die Feder oder ein Teil des Stoßdämpfers erstrecken kann.

Bei einer ganz besonders vorteilhaften Ausführung weist die Stellvorrichtung wenigstens eine Geradführung auf, die verhindert, dass sich der dritte Ankoppelabschnitt und/oder der zweite Ankoppelabschnitt relativ zum Stator des Elektromotors oder einem mit dem Stator drehfest verbundenen Bauteil drehen, wobei die Geradführung aber eine Axialbewegung des dritten Ankoppelabschnitts und/oder des zweiten Ankoppelabschnitts relativ zur Karosserie zulässt. Auf diese Weise ist vorteilhaft vermieden, dass der zweite Ankoppelabschnitt eine Drehbewegung auf den Stoßdämpfer überträgt oder dass es zu einer Relativbewegung zwischen dem zweiten Ankoppelabschnitt und dem Stoßdämpfer kommt. Analog ist auf diese Weise vorteilhaft vermieden, dass sich der dritte Ankoppelabschnitt relativ zu der Feder dreht und/oder dass der dritte Ankoppelabschnitt eine Drehbewegung auf die Feder überträgt. Die Geradführung kann unmittelbar, aber insbesondere auch mittelbar über andere Bauteile, einerseits an die Karosserie und/oder an ein Gehäuse des Elektromotors und/oder an den ersten Ankoppelabschnitt und andererseits an den dritten Ankoppelabschnitt und/oder an den zweiten Ankoppelabschnitt angekoppelt sein. Beispielsweise kann die Geradführung als Axialschiebesitz ausgebildet sein. Wenn das Federbein eines nicht gelenkten Rades an die Vorrichtung angekoppelt ist, kann die Geradführung auch derart ausgebildet sein, dass sich der zweite und/oder der dritte Ankoppelabschnitt zur Vermeidung einer unerwünschten Drehung an der Karosserie des Fahrzeugs abstützen, wobei die Karosserie vorzugsweise drehfest mit dem Stator des Elektromotors direkt oder indirekt verbunden ist.

Das Getriebe kann vorteilhaft, wie bereits erwähnt, als Spannungswellengetriebe ausgebildet sein. Eine derartige Ausführung hat verschiedene besondere Vorteile hinsichtlich der Langlebigkeit der erfindungsgemäßen Vorrichtung und hinsichtlich der Anforderungen an die Leistungsfähigkeit und die Baugröße des Elektromotors. Einerseits wird durch die Spielfreiheit des Spannungswellengetriebes erreicht, dass es nicht zu einem Ausschlagen von Getriebekomponenten im Laufe der Zeit kommt. Darüber hinaus kann durch das bei einem Spannungswellengetriebe mögliche hohe Übersetzungsverhältnis vorteilhaft ein Elektromotor geringer Baugröße zum Einsatz kommen, weil der Elektromotor nur vergleichsweise geringe Drehmomente aufbringen muss, um eine Höhenverstellung zu bewirken.

Das Spannungswellengetriebe kann vorteilhaft beispielsweise als Ringgetriebe ausgebildet sein. Insbesondere kann das Spannungswellengetriebe einen Circularspline und zusätzlich einen Dynamicspline aufweisen, die beide im Zahneingriff mit einem Flexspline stehen, wobei der Circularspline eine andere Anzahl von Zähnen aufweist, als der Dynamicspline. Dies ermöglicht eine axial besonders kompakte Realisierung der Stellvorrichtung und damit der gesamten Vorrichtung.

Alternativ ist es auch möglich, dass das Spannungswellengetriebe als Topfgetriebe ausgebildet ist. Hierbei kann ein Topf, dessen Wandung durch den Wellengenerator im Betrieb umlaufend elastisch verformbar ist und der an seinem offenen Ende eine Außenverzahnung aufweist, den Flexspline bilden, der mit einem innenverzahnten Circularspline in Zahneingriff steht.

Bei einer vorteilhaften Ausführung, die ein schnelles und präzises Einstellen des Höhenstandes einer Karosserie erlaubt, besteht der Wellengenerator aus wenigstens zwei unterschiedlichen Werkstoffen, wobei die Werkstoffe vorzugsweise derart gewählt sind, dass der Wellengenerator ein geringes Massenträgheitsmoment aufweist. Dies kann beispielsweise derart realisiert sein, dass der Wellengenerator einen Lagersitz für ein radialflexibles Wälzlager aus einem hochfesten Werkstoff, beispielsweise aus Stahl, aufweist, während der von dem Lagersitz umgebene Teil des Wellengenerators aus einem Leichtbauwerkstoff, beispielsweise aus Aluminium oder Kunststoff, hergestellt ist. Eine solche Ausführung ermöglicht ein besonders schnelles Einstellen und reduziert die Leistungsanforderungen an den Elektromotor.

Wie bereits erwähnt, ist es von Vorteil, wenn das Spannungswellengetriebe wenigstens ein, insbesondere genau ein, radialflexibles Wälzlager zur Lagerung des Wellengenerators innerhalb des Flexsplines aufweist. Es ist insbesondere möglich, dass auch mehrere radialflexible Wälzlager zum Einsatz kommen oder dass mehrreihige Wälzlager verwendet werden, um den Wellengenerator innerhalb des Flexsplines zu lagern. Dies ist insbesondere von Vorteil, wenn das Spannungswellengetriebe als Ringgetriebe mit einem Circularspline und einem Dynamicspline ausgebildet ist, wobei mittels zweier Wälzlager oder mittels eines mehrreihigen Wälzlagers sowohl eine Abstützung des Flexsplines in der Ebene des Circularsplines und zusätzlich eine Abstützung des Flexsplines in der Ebene des Dynamicsplines ermöglicht ist. Auf diese Weise können besonders hohe Drehmomente übertragen werden, ohne dass es zu Zahneingriffsstörungen aufgrund von unerwünschten Verformungen des Flexsplines kommt. Alternativ oder zusätzlich ist es auch möglich, dass das wenigstens eine radialflexible Wälzlager als Rillenkugellager oder als Tonnenlager oder als Nadellager ausgebildet ist.

Bei einer besonderen Ausführung der erfindungsgemäßen Vorrichtung ist die Stellvorrichtung selbsthemmend ausgebildet. Dies kann beispielsweise dadurch realisiert sein, dass das Getriebe und/oder die Axialverstelleinheit selbsthemmend ausgebildet sind. Bei einer solchen Ausführung wird die Stellvorrichtung durch das Gewicht der Karosserie nicht zurückgetrieben, so dass die eingestellten Abstände des ersten Ankoppelabschnitts zum zweiten und dritten Ankoppelabschnitt solange erhalten bleiben, bis mittels des Elektromotors eine andere Einstellung vorgenommen wird. Derselbe Effekt ist auch erreichbar, wenn die Stellvorrichtung derart ausgebildet ist, dass sie bei einem zu erwartenden maximalen abtriebsseitigen Drehmoment nicht rücktreibbar ist. Dies kann beispielsweise dadurch erreicht werden, dass die Reibung innerhalb des Getriebes und/oder innerhalb der Axialverstellvorrichtung derart gewählt ist, dass allein durch den auf die Vorrichtung einwirkenden Anteil des Gewichts der Karosserie ein Rücktreiben unmöglich ist. Auch in diesem Fall erfolgt eine Änderung der Abstände der ersten Ankoppelvorrichtung relativ zur zweiten und dritten Ankoppelvorrichtung aktiv mittels des Elektromotors; dies insbesondere auch im Falle einer Absenkung der Karosserie.

Bei einer besonderen Ausführung beinhaltet die Stellvorrichtung ein Spannungswellengetriebe, das derart ausgebildet ist, dass bei einem zu erwartenden maximalen abtriebsseitigen Drehmoment nicht rücktreibbar ist. Hierbei ist zu berücksichtigen, dass Spannungswellengetriebe per se nicht selbsthemmend sind, jedoch auf die beschriebene Weise dennoch der Effekt erreicht werden kann, dass die eingestellten Abstände des ersten Ankoppelabschnitts zum zweiten und dritten Ankoppelabschnitt solange erhalten bleiben, bis mittels des Elektromotors eine andere Einstellung vorgenommen wird. Dies kann beispielsweise dadurch erreicht werden, dass die Reibung innerhalb des Spannungswellengetriebes und/oder die Verzahnung und/oder die Verzahnungsgeometrie und/oder das Übersetzungsverhältnis des Spannungswellengetriebes derart gewählt ist, dass allein durch das auf das Gewicht der Karosserie zurückzuführende Drehmoment am Abtrieb des Spannungswellengetriebes ein Rücktreiben des Spannungswellengetriebes unmöglich ist.

Es ist alternativ jedoch auch möglich die Stellvorrichtung derart auszubilden, dass sie durch den jeweiligen Anteil des Gewichts der Karosserie, der auf die Vorrichtung wirkt, zurückgetrieben werden kann. Bei einer solchen Ausführung muss der Elektromotor im Falle einer Absenkung der Karosserie nicht aktiv bestromt werden. Vielmehr kann das Absenken allein durch die Gewichtskraft erfolgen, indem die Stellvorrichtung zurückgetrieben wird. Bei einer solchen Ausführung ist jedoch vorzugsweise eine Blockiervorrichtung vorhanden, die ein unerwünschtes Rücktreiben des Aktuators verhindert, falls keine Absenkung der Karosserie gewünscht ist. Auf diese Weise ist vorteilhaft vermieden, dass der Elektromotor fortlaufend bestromt bleiben muss, um eine vorgenommene Einstellung beizubehalten. Die Blockiervorrichtung kann beispielsweise als Sperre oder als Bremse ausgebildet sein, wobei die Blockiervorrichtung vorzugsweise elektrisch schaltbar ausgebildet ist, so dass nach einer Freigabe der Blockiervorrichtung durch die auf die Karosserie wirkende Gewichtskraft ein Rücktreiben der Stellvorrichtung erfolgt, wenn eine Absenkung der Karosserie gewünscht ist.

Wenn die Stellvorrichtung derart ausgebildet ist, dass sie durch den jeweiligen Anteil des Gewichts der Karosserie, der auf die Vorrichtung wirkt, zurückgetrieben werden kann, kann vorteilhaft beim Absenken der Karosserie eine Rekuperation erfolgen. Dies insbesondere in der Weise, dass der Elektromotor als Generator fungiert und elektrische Energie erzeugt, die beispielsweise in einer Batterie oder einem Akkumulator gespeichert werden kann.

Insbesondere kann die Blockiervorrichtung eine Scheibenbremse beinhalten. Die Scheibenbremse kann derart ausgebildet sein, dass mittels einer Feder ein Bremsbelag gegen eine Reibscheibe gedrückt wird, wenn die Blockiervorrichtung in einen Blockierzustand geschaltet ist.

Die Blockiervorrichtung kann insbesondre einen Hubmagneten aufweisen, um zwischen einem Blockierzustand und einem Freigabezustand umschalten zu können.

Bei einer besonderen Ausführung ist die Blockiervorrichtung als bistabile Bremse oder als bistabile Sperre, beispielsweise nach dem Kugelschreiberprinzip, ausgeführt. Dies bedeutet, dass sich die Blockiervorrichtung, beispielsweise mittels einer Federvorrichtung, selbst in ihrem jeweiligen Schaltzustand so lange hält, bis aktiv, beispielsweise durch eine Umschaltvorrichtung, einen Umschalten bewirkt wird. Eine solche Ausführung hat den besonderen Vorteil, dass die Blockiervorrichtung ohne Energieaufwand in ihrem jeweiligen Schaltzustand verbleiben kann.

Beispielsweise kann die Blockiervorrichtung einen Freilauf beinhalten.

Wie bereits erwähnt, ist eine Blockiervorrichtung von besonderem Vorteil, die insbesondere für ein Absenken einer Karosserie entsperrbar, insbesondere elektromagnetisch entsperrbar, ist.

Bei einer ganz besonders vorteilhaften Ausführung beinhaltet die Stellvorrichtung eine Ausgleichskupplung, insbesondere eine Oldham-Kupplung, die einen Radialversatz zweier paralleler Wellen der Stellvor-richtung ausgleicht.

Beispielsweise kann vorteilhaft vorgesehen sein, dass die Ausgleichskupplung den Elektromotor der Stellvorrichtung und das Getriebe der Stellvorrichtung drehstarr miteinander verbindet. Es ist auch möglich, dass die Ausgleichskupplung das Getriebe der Stellvorrichtung und die Axialverstelleinheit der Stellvorrichtung drehstarr miteinander verbindet. Es ist auch möglich, dass die Ausgleichskupplung der Axialverstelleinheit triebtechnisch nachgeschaltet ist.

Es ist insbesondere auch möglich, dass mehrere Ausgleichskupplungen vorhanden sind, wobei eine Ausgleichskupplung den Elektromotor und das Getriebe drehstarr miteinander verbindet und/oder wobei eine Ausgleichskupplung das Getriebe der Stellvorrichtung und die Axialverstelleinheit der Stellvorrichtung drehstarr miteinander verbindet und/oder wobei eine Ausgleichskupplung der Axialverstelleinheit triebtechnisch nachgeschaltet ist.

Die Verwendung wenigstens einer Ausgleichskupplung hat den besonderen Vorteil, dass empfindliche Komponenten der Stellvorrichtung von radialen Bewegungen, die im Betrieb, insbesondere beim Ein- und Ausfedern, auftreten können, entkoppelt sind und Beschädigungen, insbesondere aufgrund von Dauerbelastungen durch radiale Bewegungen, wirkungsvoll vermieden sind.

Vorzugsweise ist der zweite Ankoppelabschnitt zum Ankoppeln an das Ende einer Kolbenstange eines hydraulischen Stoßdämpfers, insbesondere eines als Teleskopstoßdämpfer ausgebildeten hydraulischen Stoßdämpfers, ausgebildet. Es ist jedoch durchaus auch möglich, dass der zweite Ankoppelabschnitt zum Ankoppeln einer anderen Komponente eines hydraulischen Stoßdämpfers ausgebildet ist.

Der dritte Ankoppelabschnitt kann insbesondere einen Federteller, insbesondere einen Federteller zur Aufnahme eines Endes einer Schraubenfeder, aufweisen.

Bei einer besonderen Ausführung lässt die Vorrichtung eine Drehung eines angekoppelten Federbeines, insbesondere für eine Lenkbewegung, zu. Eine solche Vorrichtung ist insbesondere dazu ausgebildet, bei der Achse eines Fahrzeugs, insbesondere der Vorderachse, eingesetzt zu werden, die gelenkte Räder aufweist. Zu diesem Zweck kann die erfindungsgemäße Vorrichtung ein Drehlager aufweisen, mittels dem die Stellvorrichtung oder wenigstens Teile der Stellvorrichtung relativ zu den Teilen der Vorrichtung, die drehfest mit der Karosserie verbunden werden, drehbar gelagert werden.

Bei einer besonderen Ausführung weist die Vorrichtung ein Domlager auf. Es ist alternativ auch möglich, dass die erfindungsgemäße Vorrichtung als Domlager ausgebildet ist. Bei einer anderen Ausführung ist die Vorrichtung dazu ausgebildet und bestimmt, in ein Domlager eingebaut zu werden. Insbesondere ist es alternativ auch möglich, dass die Vorrichtung dazu ausgebildet und bestimmt ist, an ein Domlager angekoppelt zu werden. Dies kann beispielsweise in der Weise realisiert werden, dass die Vorrichtung im angekoppelten bzw. eingebauten Zustand in einem Fahrzeug wenigstens teilweise, insbesondere vollständig, oberhalb des Domlagers angeordnet ist. Eine solche Ausführung hat den besonderen Vorteil, dass mehr Bauraum für das Federbein zur Verfügung steht. Insbesondere kann auch vorgesehen sein, dass die Vorrichtung im angekoppelten bzw. eingebauten Zustand in einem Fahrzeug wenigstens teilweise, insbesondere vollständig, unterhalb des Domlagers angeordnet ist. Mit den Begriffen "oberhalb" und "unterhalb" sind insbesondere die Orte der Ankopplung in Bezug auf die z-Richtung eines kartesischen Koordinatensystems gemeint, wenn die Ebene, in der das Fahrzeug sich im Fahrbetrieb bewegt, die x-y-Ebene ist.

Von besonderem Vorteil ist ein Fahrwerk, das eine erfindungsgemäße Vorrichtung aufweist, die ein Federbein, welches einen hydraulischen Stoßdämpfer und eine Feder umfasst, mit einer Karosserie verbindet. Die Feder kann insbesondere als Schraubenfeder ausgebildet sein. Insbesondere kann vorteilhaft vorgesehen sein, dass die Stellvorrichtung wenigstens teilweise in dem von der Feder umgebenen Bauraum angeordnet ist. Eine solche Ausführung ist besonders bauraumsparend.

Das Fahrwerk kann vorteilhaft für ein mehrspuriges Fahrzeug, insbesondere ein Auto oder ein LKW, ausgebildet und bestimmt sein.

Von besonderem Vorteil ist ein Fahrzeug, das eine Karosserie, ein Federbein, welches einen hydraulischen Stoßdämpfer und eine Feder umfasst, sowie eine erfindungsgemäße Vorrichtung aufweist, wobei die Vorrichtung das Federbein mit der Karosserie verbindet.

Das Fahrzeug kann vorteilhaft ein mehrspuriges Fahrzeug, insbesondere ein Auto oder ein LKW, sein. Insbesondere kann die erfindungsgemäße Vorrichtung dazu ausgebildet und bestimmt sein, in einem mehrspurigen Fahrzeug, insbesondere ein Auto oder ein LKW, verwendet zu werden.

Bei einer besonderen Ausführung eines solchen Fahrzeugs ist die Vorrichtung vollständig innerhalb des von dem Federbeindom der Karosserie umgebenen Bauraumes angeordnet. Eine solche Ausführung ermöglicht es insbesondere, die Vorrichtung in herkömmlicher Weise zu montieren.

Bei einer anderen Ausführung ragt die Vorrichtung, insbesondere nach oben, wenigstens teilweise, insbesondere vollständig, aus dem Federbeindom heraus. Eine solche Ausführung hat den besonderen Vorteil, dass die Vorrichtung, insbesondere für Wartungsarbeiten, leichter zugänglich ist und gegebenenfalls repariert werden kann, ohne dass ein Ausbau erforderlich ist. Darüber hinaus steht ein größerer Bauraum für das Federbein zur Verfügung.

Insbesondere kann vorteilhaft vorgesehen sein, dass die Stellvorrichtung wenigstens teilweise, insbesondere vollständig, außerhalb des von dem Federbeindom umgebenen Raumes angeordnet ist. Hierbei ist es beispielsweise möglich, dass der Elektromotor der Stellvorrichtung wenigstens teilweise, insbesondere vollständig, außerhalb des von dem Federbeindom umgebenen Bauraumes angeordnet ist und/oder dass das Getriebe der Stellvorrichtung wenigstens teilweise, insbesondere vollständig, außerhalb des von dem Federbeindom umgebenen Bauraumes angeordnet ist und/oder dass die Axialverstelleinheit der Stellvorrichtung wenigstens teilweise, insbesondere vollständig, außerhalb des von dem Federbeindom umgebenen Bauraumes angeordnet ist.

Beispielsweise ist es auch möglich, dass der Elektromotor wenigstens teilweise, insbesondere vollständig, außerhalb des von dem Federbeindom umgebenen Raumes angeordnet ist, während ein nachgeschaltetes Getriebe und/oder die Axialverstelleinheit innerhalb des von dem Federbeindom umgebenen Raumes angeordnet sind. Beispielsweise ist es ganz allgemein möglich, dass der Elektromotor wenigstens teilweise, insbesondere vollständig, außerhalb des von dem Federbeindom umgebenen Raumes angeordnet ist, während die übrigen Bauteile der Vorrichtung oder der Stellvorrichtung innerhalb des von dem Federbeindom umgebenen Raumes angeordnet sind.

Beispielsweise ist es auch möglich, dass der Elektromotor und ein dem Elektromotor nachgeschaltes Getriebe wenigstens teilweise, insbesondere vollständig, außerhalb des von dem Federbeindom umgebenen Raumes angeordnet sind, während die Axialverstelleinheit innerhalb des von dem Federbeindom umgebenen Raumes angeordnet ist. Beispielsweise ist es ganz allgemein möglich, dass der Elektromotor und ein dem Elektromotor nachgeschaltes Getriebe wenigstens teilweise, insbesondere vollständig, außerhalb des von dem Federbeindom umgebenen Raumes angeordnet sind, während die übrigen Bauteile der Vorrichtung oder der Stellvorrichtung innerhalb des von dem Federbeindom umgebenen Raumes angeordnet sind.

Beispielsweise ist es auch möglich, dass das dem Elektromotor nachgeschaltete Getriebe wenigstens teilweise, insbesondere vollständig, außerhalb des von dem Federbeindom umgebenen Raumes angeordnet ist, während der Elektromotor und/oder die Axialverstelleinheit innerhalb des von dem Federbeindom umgebenen Raumes angeordnet sind. Beispielsweise ist es ganz allgemein möglich, dass das Getriebe wenigstens teilweise, insbesondere vollständig, außerhalb des von dem Federbeindom umgebenen Raumes angeordnet ist, während die übrigen Bauteile der Vorrichtung oder der Stellvorrichtung innerhalb des von dem Federbeindom umgebenen Raumes angeordnet sind.

Beispielsweise ist es auch möglich, dass die Axialverstelleinheit wenigstens teilweise, insbesondere vollständig, außerhalb des von dem Federbeindom umgebenen Raumes angeordnet ist, während ein Elektromotor und ein dem Elektromotor nachgeschaltetes Getriebe innerhalb des von dem Federbeindom umgebenen Raumes angeordnet sind. Beispielsweise ist es ganz allgemein möglich, dass die Axialverstelleinheit wenigstens teilweise, insbesondere vollständig, außerhalb des von dem Federbeindom umgebenen Raumes angeordnet ist, während die übrigen Bauteile der Vorrichtung oder der Stellvorrichtung innerhalb des von dem Federbeindom umgebenen Raumes angeordnet sind.

Beispielsweise ist es auch möglich, dass der Elektromotor und ein dem Elektromotor nachgeschaltes Getriebe und die Axialverstelleinheit wenigstens teilweise, insbesondere vollständig, außerhalb des von dem Federbeindom umgebenen Raumes angeordnet sind, während die übrigen Bauteile der Vorrichtung oder der Stellvorrichtung innerhalb des von dem Federbeindom umgebenen Raumes angeordnet sind.

Insbesondere kann die Vorrichtung derart ausgebildet sein, dass im eingebauten Zustand der Vorrichtung der Elektromotor oberhalb des Getriebes und/oder oberhalb der Axialverstelleinheit angeordnet ist. Insbesondere kann, alternativ oder zusätzlich, vorteilhaft vorgesehen sein, dass im eingebauten Zustand der Vorrichtung der Elektromotor und/oder das Getriebe oberhalb der Axialverstelleinheit angeordnet sind. Mit den Begriffen "oberhalb" und "unterhalb" sind insbesondere die Orte der Ankopplung in Bezug auf die z-Richtung eines kartesischen Koordinatensystems gemeint, wenn die Ebene, in der das Fahrzeug sich im Fahrbetrieb bewegt, die x-y-Ebene ist. Diese besonderen Ausführungen können insbesondere derart ausgebildet sein, dass der Elektromotor und/oder das Getriebe und/oder die Axialverstelleinheit jeweils wenigstens teilweise, insbesondere jeweils vollständig, außerhalb des von dem Federbeindom umgebenen Raumes angeordnet sind.

Die Erfindung hat den ganz besonderen Vorteil, dass in die gleiche Karosserie, insbesondere mittels eines Adapters, anstelle der erfindungsgemäßen Vorrichtung auch ein herkömmliches Domlager, das keine Stellvorrichtung beinhaltet, mittels der der Abstand des ersten Ankoppelabschnitts relativ zu dem zweiten und dem dritten Ankoppelabschnitt einstellbar ist, eingebaut werden kann. Insoweit ist eine besonders effiziente Produktion von Fahrzeugen möglich, wobei bei Fahrzeugen, die eine Höhenverstellung aufweisen sollen, die erfindungsgemäße Vorrichtung zum Einsatz kommt, während bei Fahrzeugen, die keine Höhenverstellung aufweisen sollen, ein herkömmliches Domlager eingebaut werden kann, ohne dass hierfür Veränderungen an der Karosserie erforderlich sind.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein erstes Ausführungsbeispiel einer erfindungsgemäßen Vorrichtung zum Verbinden eines Federbeines, das eine Feder und einen hydraulischen Stoßdämpfer aufweist, mit einer Karosserie,
- Fig. 2: das erste Ausführungsbeispiel mit einer Einstellung für eine abgesenkte Karosserie,
- Fig. 3: ein zweites Ausführungsbeispiel einer erfindungsgemäßen Vorrichtung zum Verbinden eines Federbeines, das eine Feder und einen hydraulischen Stoßdämpfer aufweist, mit einer Karosserie,
- Fig. 4: das zweite Ausführungsbeispiel mit einer Einstellung für eine abgesenkte Karosserie,
- Fig. 5: ein drittes Ausführungsbeispiel einer erfindungsgemäßen Vorrichtung zum Verbinden eines Federbeines, das eine Feder und einen hydraulischen Stoßdämpfer aufweist, mit einer Karosserie,
- Fig. 6: das dritte Ausführungsbeispiel mit einer Einstellung für eine abgesenkte Karosserie,
- Fig. 7: ein viertes Ausführungsbeispiel einer erfindungsgemäßen Vorrichtung zum Verbinden eines Federbeines, das eine Feder und einen hydraulischen Stoßdämpfer aufweist, mit einer Karosserie,
- Fig. 8: das vierte Ausführungsbeispiel mit einer Einstellung für eine abgesenkte Karosserie,
- Fig. 9: ein fünftes Ausführungsbeispiel einer erfindungsgemäßen Vorrichtung zum Verbinden eines Federbeines, das eine Feder und einen hydraulischen Stoßdämpfer aufweist, mit einer Karosserie,
- Fig. 10: das fünfte Ausführungsbeispiel mit einer Einstellung für eine abgesenkte Karosserie,
- Fig. 11: ein Ausführungsbeispiel eines Aktuators für die Stellvorrichtung einer erfindungsgemäßen Vorrichtung,
- Fig. 12: ein anderes Ausführungsbeispiel eines Aktuators für die Stellvorrichtung einer erfindungsgemäßen Vorrichtung,
- Fig. 13: schematisch einen Federbeindom, an den eine erfindungsgemäße Vorrichtung zum Verbinden eines Federbeines mit einer Karosserie ankoppelbar ist,
- Fig. 14: schematisch den Federbeindom mit einem Adapter zur Ankopplung eines herkömmlichen Domlagers.

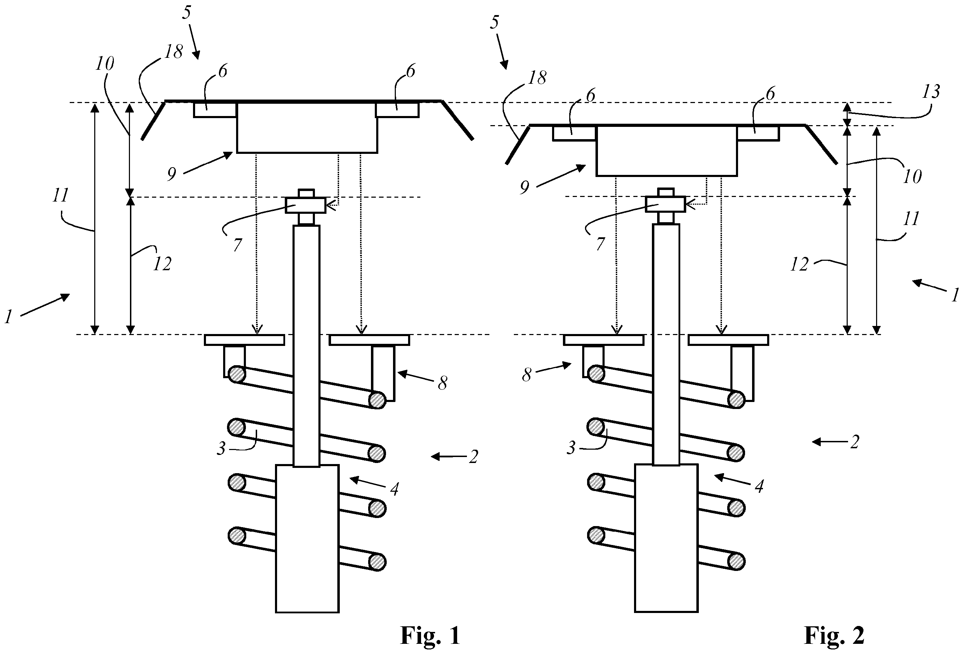

Die Figuren 1 und 2 zeigen ein erstes Ausführungsbeispiel einer erfindungsgemäßen Vorrichtung 1 zum Verbinden eines Federbeines 2, das eine Feder 3 und einen hydraulischen Stoßdämpfer 4 aufweist, mit einer Karosserie 5, nämlich einem Federbeindom 18 einer Karosserie 5.

Die Vorrichtung 1 weist einen ersten Ankoppelabschnitt 6 zum Ankoppeln an die Karosserie 5 und einen zweiten Ankoppelabschnitt 7 zum Ankoppeln an den hydraulischen Stoßdämpfer 4 des Federbeins 2 und einen dritten Ankoppelabschnitt 8 zum Ankoppeln an die Feder 3 des Federbeins 2 auf. Die Vorrichtung 1 beinhaltet eine Stellvorrichtung 9, mittels der ein erster Abstand 10 des ersten Ankoppelabschnitts 6 relativ zu dem zweiten Ankoppelabschnitt 7 einstellbar ist und mittels der ein zweiter Abstand 11 des ersten Ankoppelabschnitts 6 relativ zu dem dritten Ankoppelabschnitt 8 einstellbar ist, wobei der Abstand 12 des zweiten Ankoppelabschnitts 7 zu dem dritten Ankoppelabschnitt 8 bei einem Einstellvorgang stets konstant bleibt.

In Figur 2 ist das erste Ausführungsbeispiel mit einer Einstellung für eine (relativ zur Einstellung in Figur 1) um das Maß 13 abgesenkten Karosserie dargestellt.

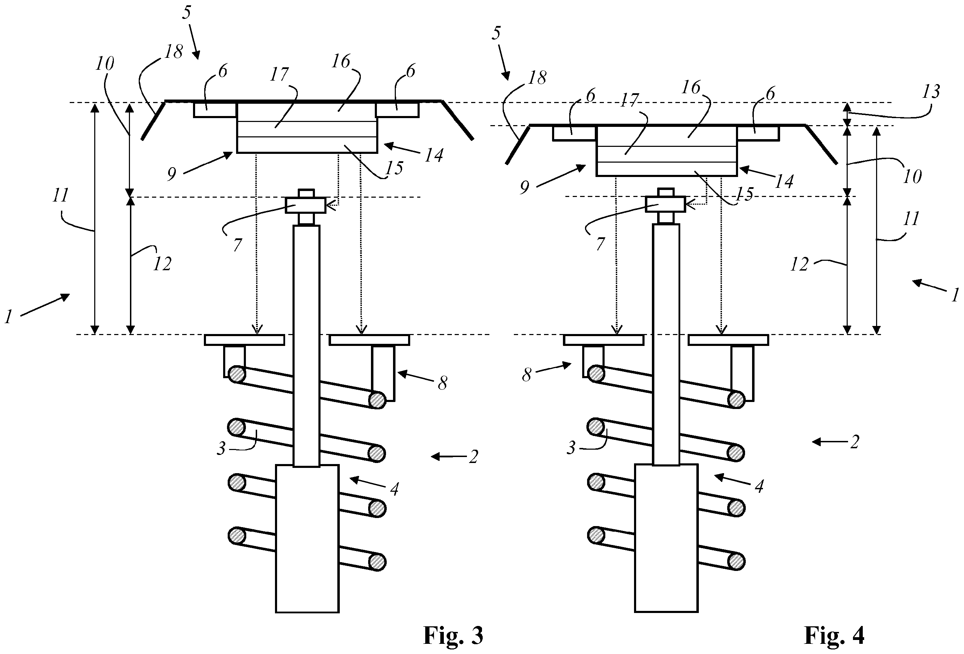

Die Figuren 3 und 4 zeigen ein zweites Ausführungsbeispiel einer erfindungsgemäßen Vorrichtung 1 zum Verbinden eines Federbeines 2, das eine Feder 3 und einen hydraulischen Stoßdämpfer 4 aufweist, mit einer Karosserie 5. Bei dieser Ausführung weist die Stellvorrichtung 9 einen Aktuator 14 und eine von dem Aktuator 14 angetriebene Axialverstelleinheit 15 auf. Der Aktuator 14 beinhaltet einen Elektromotor 16 und ein Getriebe 17, das dem Elektromotor 16 triebtechnisch nachgeschaltet ist.

In Figur 4 ist das zweite Ausführungsbeispiel mit einer Einstellung für eine (relativ zur Einstellung in Figur 3) um das Maß 13 abgesenkten Karosserie dargestellt.

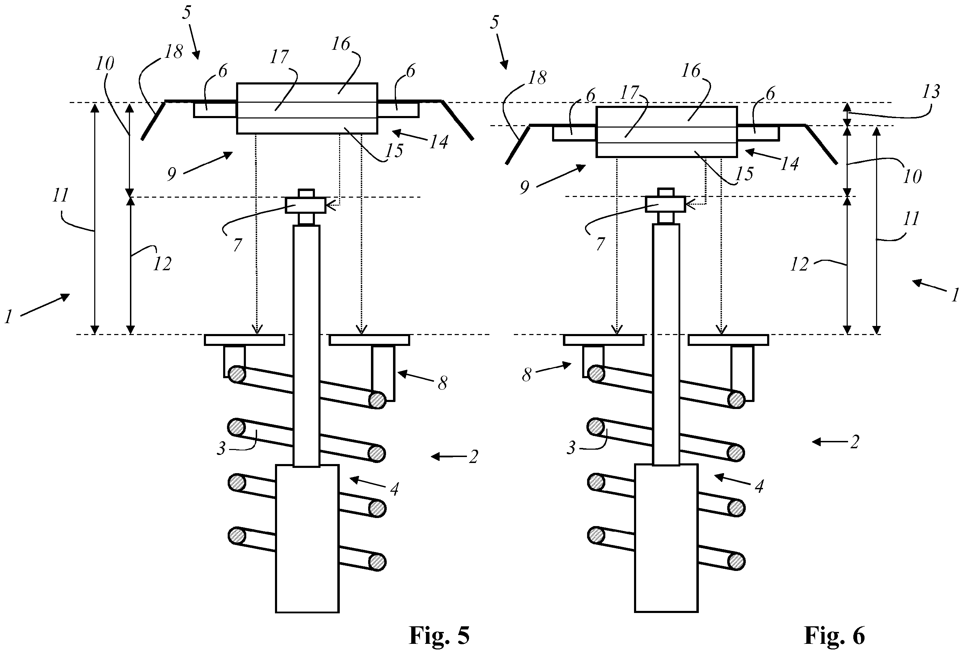

Die Figuren 5 und 6 zeigen ein drittes Ausführungsbeispiel einer erfindungsgemäßen Vorrichtung 1 zum Verbinden eines Federbeines 2, das eine Feder 3 und einen hydraulischen Stoßdämpfer 4 aufweist, mit einer Karosserie 5. Auch bei dieser Ausführung weist die Stellvorrichtung 9 einen Aktuator 14 und eine von dem Aktuator 14 angetriebene Axialverstelleinheit 15 auf. Der Aktuator 14 beinhaltet einen Elektromotor 16 und ein Getriebe 17, das dem Elektromotor 16 triebtechnisch nachgeschaltet ist. Im Unterscheid zu dem in den Figuren 3 und 4 dargestellten Ausführungsbeispiel ist der Elektromotor 16 der Stellvorrichtung 9 außerhalb des von dem Federbeindom 18 umgebenen Bauraumes angeordnet. Konkret ragt der Elektromotor 16 nach oben durch eine Öffnung in dem Federbeindom 18.

In Figur 6 ist das dritte Ausführungsbeispiel mit einer Einstellung für eine (relativ zur Einstellung in Figur 5) um das Maß 13 abgesenkten Karosserie dargestellt.

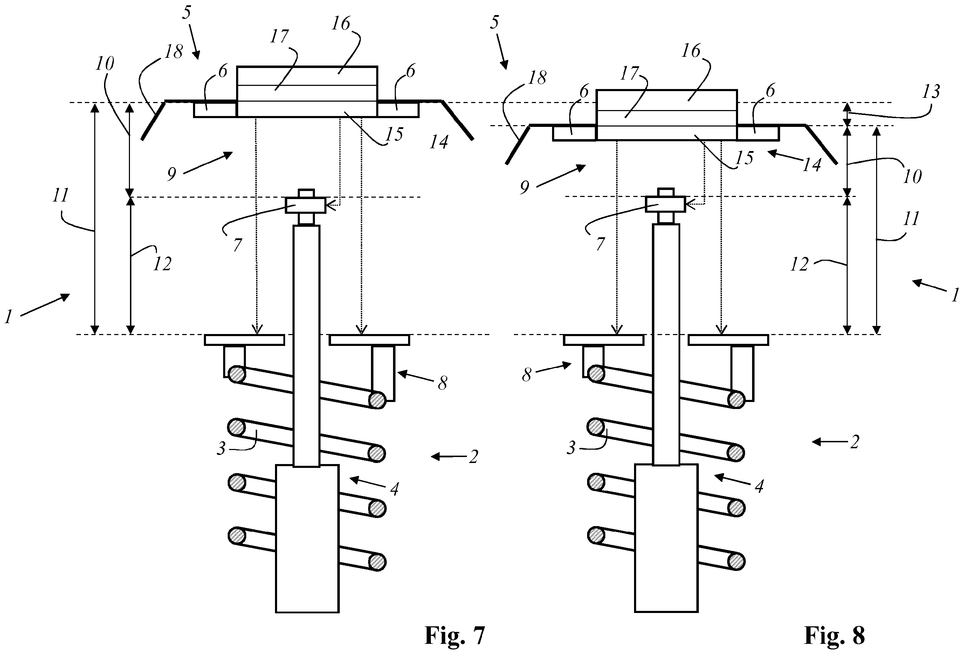

Die Figuren 7 und 8 zeigen ein viertes Ausführungsbeispiel einer erfindungsgemäßen Vorrichtung 1 zum Verbinden eines Federbeines 2, das eine Feder 3 und einen hydraulischen Stoßdämpfer 4 aufweist, mit einer Karosserie 5. Auch bei dieser Ausführung weist die Stellvorrichtung 9 einen Aktuator 14 und eine von dem Aktuator 14 angetriebene Axialverstelleinheit 15 auf. Der Aktuator 14 beinhaltet einen Elektromotor 16 und ein Getriebe 17, das dem Elektromotor 16 triebtechnisch nachgeschaltet ist. Im Unterscheid zu dem in den Figuren 3 und 4 dargestellten Ausführungsbeispiel sind der Elektromotor 16 und das Getriebe 17 der Stellvorrichtung 9 außerhalb des von dem Federbeindom 18 umgebenen Bauraumes angeordnet. Konkret ragen der Elektromotor 16 und das Getriebe 17 nach oben durch eine Öffnung in dem Federbeindom 18.

In Figur 8 ist das vierte Ausführungsbeispiel mit einer Einstellung für eine (relativ zur Einstellung in Figur 7) um das Maß 13 abgesenkten Karosserie dargestellt.

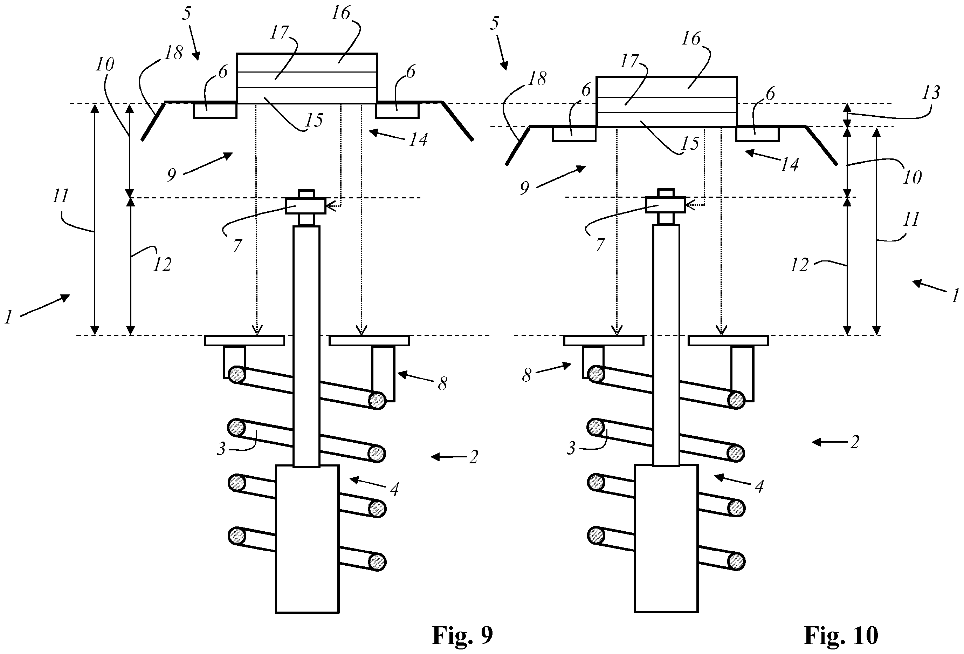

Die Figuren 9 und 10 zeigen ein fünftes Ausführungsbeispiel einer erfindungsgemäßen Vorrichtung 1 zum Verbinden eines Federbeines 2, das eine Feder 3 und einen hydraulischen Stoßdämpfer 4 aufweist, mit einer Karosserie 5. Auch bei dieser Ausführung weist die Stellvorrichtung 9 einen Aktuator 14 und eine von dem Aktuator 14 angetriebene Axialverstelleinheit 15 auf. Der Aktuator 14 beinhaltet einen Elektromotor 16 und ein Getriebe 17, das dem Elektromotor 16 triebtechnisch nachgeschaltet ist. Im Unterscheid zu dem in den Figuren 3 und 4 dargestellten Ausführungsbeispiel ist die Stellvorrichtung 9 samt dem Elektromotor 16, dem Getriebe 17 und der Axialverstelleinheit 15 außerhalb des von dem Federbeindom 18 umgebenen Bauraumes angeordnet. Konkret ragt die Stellvorrichtung 9 nach oben durch eine Öffnung in dem Federbeindom 18.

In Figur 10 ist das fünfte Ausführungsbeispiel mit einer Einstellung für eine (relativ zur Einstellung in Figur 9) um das Maß 13 abgesenkten Karosserie dargestellt.

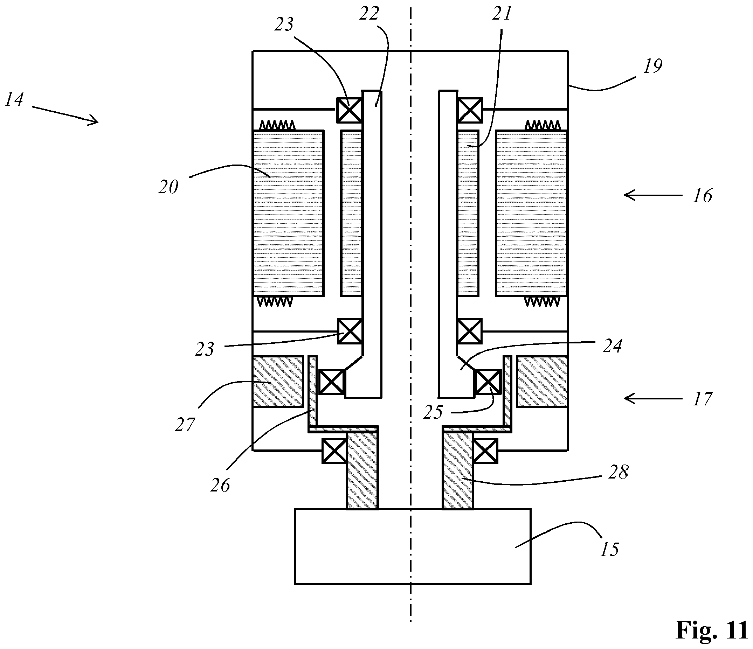

Fig. 11 zeigt ein Ausführungsbeispiel eines Aktuators 14 für die Stellvorrichtung 9 einer erfindungsgemäßen Vorrichtung 1. Der Aktuator 14 beinhaltet in einem Gehäuse 19 einen Elektromotor 16 und ein dem Elektromotor 16 triebtechnisch nachgeschaltetes Getriebe 17.

Der Elektromotor 16 weist einen drehfest mit dem Gehäuse 19 verbundenen Stator 20 und einen rotierbar gelagerten Rotor 21 auf. Konkret ist der Rotor 21 indirekt über eine Abtriebswelle 22, die als Hohlwelle ausgebildet sein kann, mittels zweier Wälzlager 23 rotierbar gelagert.

Das Getriebe 17 ist als Spannungswellengetriebe ausgebildet und weist einen rotierbar gelagerten, ovalen Wellengenerator 24 auf, der einstückig mit der Abtriebswelle 22 des Elektromotors 16 ausgebildet ist. Der Wellengenerator 24 ist mittels eines radialflexiblen Wälzlagers 25 rotierbar innerhalb eines Flexsplines 26 gelagert. Der Flexspline 26 weist eine Außenverzahnung auf, die an zwei gegenüberliegenden Stellen mit der Innenverzahnung eines Circularsplines 27 in Zahneingriff steht. Der Flexspline 26 ist topfförmig ausgebildet und mit einer Getriebeabtriebswelle 28 drehfest verbunden. Die Getriebeabtriebswelle 28 ist drehfest mit der Axialverstelleinheit 15 verbunden.

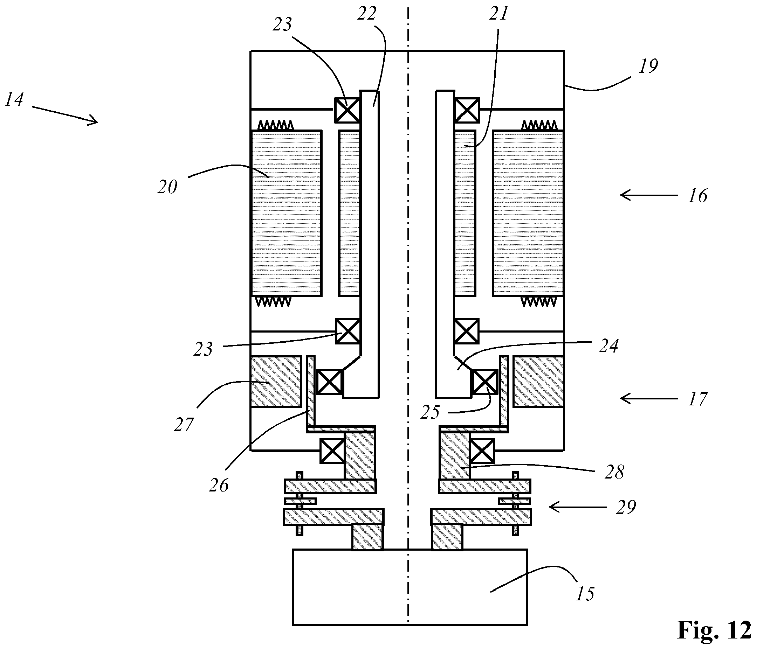

Figur 12 zeigt ein weiteres Ausführungsbeispiel eines Aktuators 14 für die Stellvorrichtung 9 einer erfindungsgemäßen Vorrichtung 1. Bei diesem Ausführungsbeispiel ist die Getriebeabtriebswelle 28 des Getriebes 17 mittels einer torsionssteifen und gleichzeitig biegeweichen Kupplung 29 mit dem Antrieb der Axialverstelleinheit 15 drehmomentübertragend verbunden.

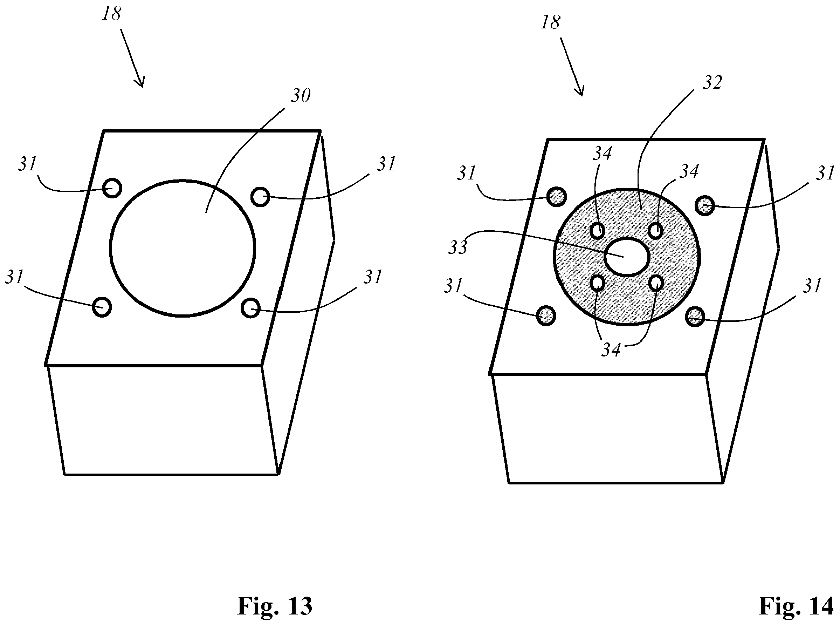

Figur 13 zeigt schematisch einen Federbeindom 18, an den eine erfindungsgemäße Vorrichtung 1 zum Verbinden eines Federbeines 2 mit einer Karosserie 5 ankoppelbar ist. Der Federbeindom 18 weist eine zentrale Öffnung 30 auf, durch die beispielsweise wenigstens ein Teil der Stellvorrichtung 9 der Vorrichtung 1 ragen kann. Darüber hinaus weist der Federbeindom 18 mehrere Befestigungsbohrungen 31 für Befestigungsschrauben auf, mittels denen die Vorrichtung 1, insbesondere der erste Ankoppelabschnitt 6 der Vorrichtung 1, befestigt werden kann.

Figur 14 zeigt schematisch den gleichen Federbeindom 18 mit einem Adapter 32 zur Ankopplung eines herkömmlichen (nicht dargestellten) Domlagers. Eine solche Ausführung hat den Vorteil, dass in die gleiche Karosserie 5 mittels des Adapters 32, anstelle der erfindungsgemäßen Vorrichtung 1 auch ein herkömmliches Domlager, das keine Stellvorrichtung 9 beinhaltet, eingebaut werden kann. Insoweit ist eine besonders effiziente Produktion von Fahrzeugen möglich, wobei bei Fahrzeugen, die eine Höhenverstellung aufweisen sollen, die erfindungsgemäße Vorrichtung 1 zum Einsatz kommt, während bei Fahrzeugen, die keine Höhenverstellung aufweisen sollen, unter Verwendung des Adapters 32 ein herkömmliches Domlager eingebaut wird, ohne dass hierfür Veränderungen an der Karosserie 5 erforderlich sind.

Der Adapter 32 weist eine weitere zentrale Öffnung 33 auf, durch die beispielsweise wenigstens ein Teil eines Federbeines 2 ragen kann. Darüber hinaus weist der Adapter 32 mehrere weitere Befestigungsbohrungen 34 für Befestigungsschrauben auf, mittels denen ein (nicht dargestelltes) Domlager befestigt werden kann. Der Adapter 32 ist an dem Federbeindom 18 unter Verwendung der Befestigungsbohrungen 31 mittels (nicht dargestellter) Befestigungsschrauben befestigt.

### Bezugszeichenliste:

- 1: Vorrichtung
- 2: Federbein
- 3: Feder
- 4: hydraulischer Stoßdämpfer
- 5: Karosserie
- 6: erster Ankoppelabschnitt
- 7: zweiter Ankoppelabschnitt
- 8: dritter Ankoppelabschnitt
- 9: Stellvorrichtung
- 10: erster Abstand
- 11: zweiter Abstand
- 12: Abstand
- 13: Maß
- 14: Aktuator
- 15: Axialverstelleinheit
- 16: Elektromotor
- 17: Getriebe
- 18: Federbeindom
- 19: Gehäuse
- 20: Stator
- 21: Rotor
- 22: Abtriebswelle
- 23: Wälzlager
- 24: Wellengenerator
- 25: radialflexibles Wälzlager
- 26: Flexspline
- 27: Circularspline
- 28: Getriebeabtriebswelle
- 29: torsionssteife und gleichzeitig biegeweiche Kupplung
- 30: Öffnung
- 31: Befestigungsbohrungen
- 32: Adapter
- 33: weitere zentrale Öffnung
- 34: weitere Befestigungsbohrungen

## Patentansprüche

1. Vorrichtung zum Verbinden eines Federbeines, das eine Feder und einen hydraulischen Stoßdämpfer aufweist, mit einer Karosserie, wobei die Vorrichtung einen ersten Ankoppelabschnitt zum Ankoppeln an die Karosserie und einen zweiten Ankoppelabschnitt zum Ankoppeln an das Ende einer Kolbenstange eines_hydraulischen Stoßdämpfers des Federbeins und einen dritten Ankoppelabschnitt zum Ankoppeln an die Feder des Federbeins aufweist, **dadurch gekennzeichnet, dass** die Vorrichtung eine Stellvorrichtung beinhaltet, die einen Aktuator mit einem Elektromotor und mit einem dem Elektromotor triebtechnisch nachgeschalteten Getriebe aufweist, mittels der der Abstand des ersten Ankoppelabschnitts relativ zu dem zweiten und dritten Ankoppelabschnitt einstellbar ist und der Abstand des zweiten Ankoppelabschnitts zu dem dritten Ankoppelabschnitt bei einem Einstellvorgang konstant bleibt, wobei die Kolbenstange an dem Ende ein Außengewinde für eine Befestigungsmutter aufweist und/oder wobei die Kolbenstange nicht Teil der Stellvorrichtung ist.

2. Vorrichtung nach Anspruch 1, **dadurch gekennzeichnet, dass**
a. die Stellvorrichtung einen Aktuator und eine von dem Aktuator angetriebene Axialverstelleinheit aufweist, oder dass
b. die Stellvorrichtung einen einzigen Aktuator und eine von dem Aktuator angetriebene Axialverstelleinheit aufweist.

3. Vorrichtung nach Anspruch 2, **dadurch gekennzeichnet, dass** der Aktuator einen Elektromotor und ein Getriebe beinhaltet, wobei das Getriebe dem Elektromotor triebtechnisch nachgeschaltet ist.

4. Vorrichtung nach Anspruch 3, **dadurch gekennzeichnet, dass**
a. ein Getriebeabtrieb des Getriebes mit einem Antrieb der Axialverstelleinheit drehmomentübertragend verbunden ist, und/oder dass
b. der Getriebeabtrieb des Getriebes mittels einer torsionssteifen und gleichzeitig biegeweichen Kupplung mit dem Antrieb der Axialverstelleinheit drehmomentübertragend verbunden ist. und/oder dass
c. das Getriebe koaxial zu dem Elektromotor und/oder koaxial zu der Axialverstelleinheit angeordnet ist.

5. Vorrichtung nach Anspruch 3 oder 4, **dadurch gekennzeichnet, dass**
a. das Getriebe als Spannungswellengetriebe ausgebildet ist, oder dass
b. das Getriebe als Spannungswellengetriebe und als Ringgetriebe ausgebildet ist, oder dass
c. das Getriebe als Spannungswellengetriebe und als Topfgetriebe ausgebildet ist.

6. Vorrichtung nach Anspruch 5, **dadurch gekennzeichnet, dass**
a. ein Wellengenerator des Spannungswellengetriebes aus wenigstens zwei unterschiedlichen Werkstoffen besteht, oder dass
b. ein Wellengenerator des Spannungswellengetriebes aus wenigstens zwei unterschiedlich festen Werkstoffen besteht, wobei ein Lagersitz für ein radialflexibles Wälzlager einen hochfesten Werkstoff, insbesondere Stahl, aufweist, während wenigstens ein von dem Lagersitz umgebener Teil des Wellengenerators aus wenigstens einem Leichtbauwerkstoff, insbesondere Aluminium oder Kunststoff, hergestellt ist.

7. Vorrichtung nach Anspruch 5 oder 6, **dadurch gekennzeichnet, dass**
a. das Spannungswellengetriebe wenigstens ein, insbesondere genau ein, radialflexibles Wälzlager aufweist, oder dass
b. das Spannungswellengetriebe ein radialflexibles Wälzlager aufweist, das als Rillenkugellager oder als mehrreihiges Lager oder als Tonnenlager oder als Nadellager ausgebildet ist.

8. Vorrichtung nach einem der Ansprüche 1 bis 7, **dadurch gekennzeichnet, dass**
a. die Stellvorrichtung selbsthemmend ausgebildet ist oder dass die Stellvorrichtung derart ausgebildet ist, dass sie bei einem zu erwartenden maximalen abtriebsseitigen Drehmoment nicht rücktreibbar ist, oder dass
b. die Stellvorrichtung eine Blockiervorrichtung beinhaltet, mittels der ein Rücktreiben des Aktuators verhinderbar ist, oder dass
c. die Stellvorrichtung eine Blockiervorrichtung beinhaltet, mittels der ein Rücktreiben des Aktuators verhinderbar ist, wobei die Blockiervorrichtung als Sperre oder als Bremse ausgebildet ist, oder dass
d. die Stellvorrichtung eine Blockiervorrichtung beinhaltet, mittels der ein Rücktreiben des Aktuators verhinderbar ist, wobei die Blockiervorrichtung einen Freilauf beinhaltet, oder dass
e. die Stellvorrichtung eine Blockiervorrichtung beinhaltet, mittels der ein Rücktreiben des Aktuators verhinderbar ist, wobei die Blockiervorrichtung, insbesondere für ein Absenken einer Karosserie, entsperrbar, insbesondere elektromagnetisch entsperrbar, ist.

9. Vorrichtung nach einem der Ansprüche 1 bis 8, **dadurch gekennzeichnet, dass**
a. die Stellvorrichtung eine Ausgleichskupplung, insbesondere eine Oldhamkupplung, aufweist, die einen Radialversatz zweier paralleler Wellen ausgleicht, oder dass
b. die Stellvorrichtung eine Ausgleichskupplung, insbesondere eine Oldhamkupplung, aufweist, die den Elektromotor der Stellvorrichtung und das Getriebe der Stellvorrichtung drehstarr miteinander verbindet, oder dass
c. die Stellvorrichtung eine Ausgleichskupplung, insbesondere eine Oldhamkupplung, aufweist, die das Getriebe der Stellvorrichtung und die Axialverstelleinheit der Stellvorrichtung drehstarr miteinander verbindet, oder dass
d. die Stellvorrichtung eine Ausgleichskupplung, insbesondere eine Oldhamkupplung, aufweist, die der Axialverstelleinheit triebtechnisch nachgeschaltet ist.

10. Vorrichtung nach einem der Ansprüche 1 bis 9, **dadurch gekennzeichnet, dass**
a. der zweite Ankoppelabschnitt zum Ankoppeln an das Ende einer Kolbenstange eines Stoßdämpfers, insbesondere eines als Teleskopstoßdämpfer ausgebildeten Stoßdämpfers, ausgebildet ist, und/oder dass
b. der dritte Ankoppelabschnitt einen Federteller, insbesondere einen Federteller zur Aufnahme eines Endes eines Schraubenfeder, aufweist.

11. Vorrichtung nach einem der Ansprüche 1 bis 10, **dadurch gekennzeichnet, dass**
a. die Vorrichtung eine Drehung eines angekoppelten Federbeines, insbesondere für eine Lenkbewegung, zulässt, und/oder dass
b. die Stellvorrichtung wenigstens eine Geradführung aufweist, die verhindert, dass sich der dritte Ankoppelabschnitt und/oder der zweite Ankoppelabschnitt relativ zum Stator des Elektromotors oder einem mit dem Stator drehfest verbundenen Bauteil drehen, die aber eine Axialbewegung des dritten Ankoppelabschnitt und/oder des zweiten Ankoppelabschnitts relativ zu einer Karosserie zulässt, und/oder dass
c. die Vorrichtung ein Domlager beinhaltet oder Teil eines Domlagers ist oder dazu ausgebildet und bestimmt ist, in ein Domlager eingebaut zu werden, oder dazu ausgebildet und bestimmt ist, an ein Domlager angekoppelt zu werden.

12. Fahrwerk aufweisend ein Federbein, welches einen Stoßdämpfer und eine Feder sowie eine Vorrichtung nach einem der Ansprüche 1 bis 11 umfasst.

13. Fahrwerk nach Anspruch 12, **dadurch gekennzeichnet, dass** die Feder als Schraubenfeder ausgebildet ist und dass die Stellvorrichtung wenigstens teilweise in dem von der Feder umgebenen Bauraum angeordnet ist.

14. Fahrzeug aufweisend eine Karosserie, ein Federbein, welches einen Stoßdämpfer und eine Feder umfasst, **dadurch gekennzeichnet, dass**
a. das Fahrzeug eine Vorrichtung nach einem der Ansprüche 1 bis 11 aufweist, die das Federbein mit der Karosserie verbindet, oder dass
b. die Karosserie einen Federbeindom aufweist, wobei eine Vorrichtung nach einem der Ansprüche 1 bis 11 vollständig innerhalb des von dem Federbeindom umgebenen Bauraumes angeordnet ist, oder dass
c. die Karosserie einen Federbeindom aufweist, wobei eine Vorrichtung nach einem der Ansprüche 1 bis 11, insbesondere nach oben, wenigstens teilweise aus dem Federbeindom heraus ragt, oder dass
d. die Karosserie einen Federbeindom aufweist, wobei die Stellvorrichtung einer Vorrichtung nach einem der Ansprüche 1 bis 11 wenigstens teilweise außerhalb des von dem Federbeindom umgebenen Bauraumes angeordnet ist, oder dass
e. die Karosserie einen Federbeindom aufweist, wobei der Elektromotor der Stellvorrichtung einer Vorrichtung nach einem der Ansprüche 1 bis 11 wenigstens teilweise außerhalb des von dem Federbeindom umgebenen Bauraumes angeordnet ist, oder dass
f. die Karosserie einen Federbeindom aufweist, wobei das Getriebe der Stellvorrichtung einer Vorrichtung nach einem der Ansprüche 1 bis 11 wenigstens teilweise außerhalb des von dem Federbeindom umgebenen Bauraumes angeordnet ist, oder dass
g. die Karosserie einen Federbeindom aufweist, wobei die Axialverstelleinheit der Stellvorrichtung einer Vorrichtung nach einem der Ansprüche 1 bis 11 wenigstens teilweise außerhalb des von dem Federbeindom umgebenen Bauraumes angeordnet ist.

15. Verfahren zum Herstellen eines Fahrzeugs, **dadurch gekennzeichnet, dass** an eine Karosserie, die zum Ankoppeln einer Vorrichtung nach einem der Ansprüche 6 bis 10 ausgebildet ist, entweder
a. eine Vorrichtung nach einem der Ansprüche 6 bis 10 angekoppelt wird, wenn das Fahrzeug eine Höhenverstellung aufweisen soll, oder
b. ein Domlager, das keine Stellvorrichtung beinhaltet, mittels der der Abstand des ersten Ankoppelabschnitts relativ zu dem zweiten und dritten Ankoppelabschnitt einstellbar ist, mittels eines Adapters an die Karosserie angekoppelt wird, wenn das Fahrzeug keine Höhenverstellung aufweisen soll, wobei
c. unabhängig davon, ob eine Vorrichtung nach einem der Ansprüche 6 bis 10 oder ein Domlager, das keine Stellvorrichtung beinhaltet, mittels der der Abstand des ersten Ankoppelabschnitts relativ zu dem zweiten und dritten Ankoppelabschnitt einstellbar ist, angekoppelt wird, dieselben Ankoppelelemente der Karosserie zur Ankopplung verwendet werden.
